# EUROPÄISCHE PATENTSCHRIFT

(11) **EP 3 685 348 B1**
(45) Veröffentlichungstag und Bekanntmachung des Hinweises auf die Patenterteilung: **28.01.2026**
(21) Anmeldenummer: 18772724.3
(22) Anmeldetag: 04.09.2018
(51) Int. Cl.: G06T 5/80, G06T 7/80, B60K 35/22

(54) **VORRICHTUNG UND VERFAHREN ZUM ANPASSEN EINER BILDVERARBEITUNG BASIEREND AUF EINER FORM EINER ANZEIGENEINRICHTUNG FÜR EIN KRAFTFAHRZEUG**
APPARATUS AND METHOD FOR ADAPTING IMAGE PROCESSING BASED ON A SHAPE OF A DISPLAY DEVICE FOR A MOTOR VEHICLE
DISPOSITIF ET PROCÉDÉ POUR L'ADAPTATION D'UN TRAITEMENT D'IMAGE BASÉ SUR UNE FORME D'UN DISPOSITIF D'AFFICHAGE POUR UN VÉHICULE À MOTEUR

(30) Priorität: 22.09.2017 DE 102017216822
(43) Veröffentlichungstag der Anmeldung: 29.07.2020
(73) Patentinhaber: Continental Autonomous Mobility Germany GmbH, 85057 Ingolstadt (DE)
(72) Erfinder: SELENSKY, Denis, DE/90411 Nümberg (DE); FRIEBE, Markus, 95482 Gefrees (DE)
(74) Vertreter: Aumovio Corporation
(86) Internationale Anmeldenummer: PCT/DE2018/200082
(87) Internationale Veröffentlichungsnummer: WO 2019/057253

(56) Entgegenhaltungen:
- EP-A1- 2 127 950
- EP-A1- 2 667 615
- EP-A1- 3 082 127
- WO-A1-2007/000178
- WO-A1-2015/044280
- DE-A1- 102007 021 230
- US-A1- 2008 089 611
- US-A1- 2015 160 539

## Beschreibung

### Technisches Gebiet

Die vorliegende Erfindung betrifft Bildverarbeitungs- und Anzeigesysteme im Kraftfahrzeug.

Insbesondere betrifft die vorliegende Erfindung eine Vorrichtung und ein Verfahren zum Anpassen einer Bildverarbeitung basierend auf einer Form einer Anzeigeneinrichtung einer A-Säule für ein Kraftfahrzeug.

### Technischer Hintergrund

Bei aktuellen Bildverarbeitungsfunktionen von der Rundumsicht für Kraftfahrzeuge bzw. Umfeldanzeigesystemen, auch "Surround-View-Systems" auf Englisch bezeichnet, wird die Form des Displays bzw. der Anzeigeneinrichtung nicht übernommen oder berücksichtigt. Die Form des Displays bzw. der Anzeigeneinrichtung hat aber großen Einfluss auf die Visualisierungsqualität.

Auch sichtbare Reprojektions-Artefakte von anderen beweglichen Auto-Bauteilen, wie Seiten- oder Hecktüren und Tankdeckeln, können dabei auftreten.

Die WO 2015/044280 A1 beschreibt ein Verfahren und Gerät zur Steuerung einer Bilderzeugungsvorrichtung einer Head-up-Anzeige.

Die EP 3082127A1 beschreibt ein Anzeigesteuergerät, Heads-up-Bildanzeigesystem und ein Verfahren.

Die US 2008/089611 A1 beschreibt ein Heads-up-Bildanzeigesystem und Verfahren.

Die DE 10 2007 021 230 A1 beschreibt Verfahren zur Kalibrierung einer Vielzahl von Projektionseinrichtungen.Die EP 3082127A1 beschreibt ein Anzeigesteuergerät, Heads-up-Bildanzeigesystem und ein Verfahren.

Die US 2008/089611 A1 beschreibt ein Heads-up-Bildanzeigesystem und Verfahren.

Druckschrift EP 2 127 950 A1 beschreibt ein Verfahren und eine Vorrichtung zur Vergrößerung des Sehfeldes eines in einem Kraftfahrzeug befindlichen Fahrers. Dazu werden mit Hilfe mindestens einer im Außenbereich des Kraftfahrzeuges angeordneten Kamera Bilder aufgenommen und in einer Verarbeitungselektronik weiterverarbeitet, so dass sich Bilder ergeben, welche jeweils dem Bild des Sehfeldes des Fahrers entsprechen, das sich ohne die das Sehfeld begrenzenden Hindernisse ergibt. Diese Bilder werden dann mittels mindestens einer im Innenraum des Kraftfahrzeuges angeordneten Projektionseinrichtung abschnittsweise auf Projektionsflächen dargestellt, welche innenseitig an den Hindernissen im vorderen Kraftfahrzeugbereich befestigt sind.

### Zusammenfassung der Erfindung

Es ist eine Aufgabe der vorliegenden Erfindung, eine verbesserte Rundumsicht bzw. Umfeldanzeige des Kraftfahrzeugs für ein Fahrerassistenzsystem breitzustellen.

Diese Aufgabe wird durch die Gegenstände der unabhängigen Patentansprüche gelöst. Weiterbildungen und Ausführungsformen sind den abhängigen Patentansprüchen, der Beschreibung und den Figuren der Zeichnungen zu entnehmen.

Ein erster Aspekt der vorliegenden Erfindung betrifft eine Vorrichtung zum Anpassen einer Bildverarbeitung basierend auf einer Form einer Anzeigeneinrichtung für ein Kraftfahrzeug.

Die Vorrichtung zum Anpassen einer Bildverarbeitung basierend auf einer Form einer Anzeigeneinrichtung für ein Kraftfahrzeug umfasst eine Erfassungseinrichtung, welche dazu ausgebildet ist, eine Form eine Anzeigeneinrichtung und einen extrinsischen Kameraparameter einer Kamera, einen intrinsischen Kameraparameter der Kamera, und mindestens ein Sichtfeld der Kamera zu erfassen.

Mit anderen Worten ausgedrückt, die Erfassungseinrichtung ist dazu ausgebildet, die extrinsischen Kameraparameter der Kamera und die intrinsischen Kameraparameter der Kamera zu erfassen, dies kann die Erfassung von allen extrinsischen und intrinsischen Kameraparameter umfassen.

Die Vorrichtung umfasst ferner eine Recheneinrichtung, welche dazu ausgebildet ist, eine Reprojektionsfläche und eine Entsprechungstabelle basierend auf der erfassten Form der Anzeigeneinrichtung und basierend auf dem extrinsischen Kameraparameter, dem intrinsischen Kameraparameter, und dem mindestens einen Sichtfeld zu berechnen.

Die Vorrichtung umfasst ferner eine Bildverarbeitungseinrichtung, welche dazu ausgebildet ist, eine angepasste Bildverarbeitung basierend auf der berechneten Reprojektionsfläche und der berechneten Entsprechungstabelle durchzuführen.

Der Begriff "Form" der Anzeigeneinrichtung wie von der vorliegenden Erfindung verwendet, umfasst dabei beispielsweise die Ausprägung der Oberfläche der Anzeigeneinrichtung, etwa der Verlauf der Krümmung über eine Displaybreite.

Vorteilhafte Ausgestaltungen der vorliegenden Erfindung sind den Unteransprüchen zu entnehmen.

Erfindungsgemäß ist vorgesehen, dass die Erfassungseinrichtung dazu ausgebildet ist, die Form der Anzeigeneinrichtung einer A-Säule eines Kraftfahrzeuges zu erfassen.

In einer vorteilhaften Ausführungsform der vorliegenden Erfindung ist vorgesehen, dass die Recheneinrichtung dazu ausgebildet ist, die Reprojektionsfläche zum Ausgleichen einer Krümmung der Anzeigeneinrichtung zu berechnen.

Dies ermöglicht vorteilhaft, die Qualität der Anzeige von Umgebungsszenarien zu verbessern und Bildverzerrungen von angezeigten Bildinformationen zu vermeiden.

In einer vorteilhaften Ausführungsform der vorliegenden Erfindung ist vorgesehen, dass die Recheneinrichtung dazu ausgebildet ist, die Reprojektionsfläche basierend auf einem projizierten Anzeigengitter zu berechnen.

In einer vorteilhaften Ausführungsform der vorliegenden Erfindung ist vorgesehen, dass die Recheneinrichtung dazu ausgebildet ist, das projizierte Anzeigengitter auf einer Teilfläche des Sichtfeldes zu generieren.

Erfindungsgemäß ist vorgesehen, dass die Form der Anzeigeneinrichtung einer A-Säule eines Kraftfahrzeuges erfasst wird.

In einer vorteilhaften Ausführungsform der vorliegenden Erfindung ist vorgesehen, dass die Reprojektionsfläche zum Ausgleichen einer Krümmung der Anzeigeneinrichtung berechnet wird.

In einer vorteilhaften Ausführungsform der vorliegenden Erfindung ist vorgesehen, dass die Reprojektionsfläche basierend auf einem projizierten Anzeigengitter berechnet wird.

In einer vorteilhaften Ausführungsform der vorliegenden Erfindung ist vorgesehen, dass das projizierte Anzeigengitter auf einer Teilfläche des Sichtfeldes generiert wird.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln.

Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Es zeigen:
- Fig. 1: eine schematische Darstellung einer Vorrichtung zum Anpassen einer Bildverarbeitung basierend auf einer Form einer Anzeigeneinrichtung für ein Kraftfahrzeug gemäß einem Ausführungsbeispiel der vorliegenden Erfindung;
- Fig. 2: eine schematische Darstellung eines Flussdiagramms eines Verfahrens zum Anpassen einer Bildverarbeitung basierend auf einer Form einer Anzeigeneinrichtung für ein Kraftfahrzeug gemäß einem weiteren Ausführungsbeispiel der vorliegenden Erfindung; und
- Fig. 3: eine schematische Darstellung eines Verfahrens zum Anpassen einer Bildverarbeitung basierend auf einer Form einer Anzeigeneinrichtung für ein Kraftfahrzeug gemäß einem weiteren Ausführungsbeispiel der vorliegenden Erfindung;
- Fig. 4: eine schematische Darstellung einer Simulation der Kamera-Reprojektion mit Bildentzerrung der Display-Form gemäß einem weiteren Ausführungsbeispiel der vorliegenden Erfindung.

### Detaillierte Beschreibung der Ausführungsbeispiele

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

Bei dem Kraftfahrzeug bzw. Fahrzeug handelt es sich beispielsweise um ein Kraftfahrzeug oder um ein Hybridfahrzeug, beispielsweise ein Hybridfahrzeug mit Segelfunktion, beispielsweise ein Motorrad, ein Bus oder ein Lastkraftwagen oder ein Fahrrad.

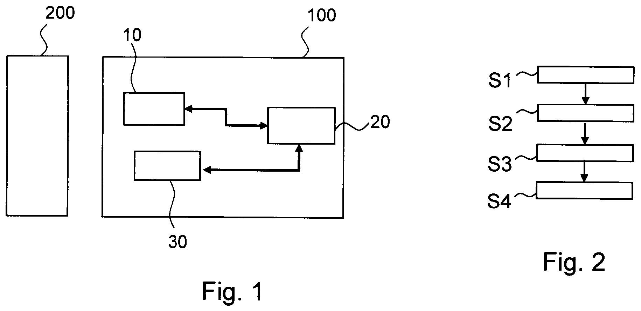

Die Fig. 1 zeigt eine schematische Darstellung einer Vorrichtung zum Anpassen einer Bildverarbeitung basierend auf einer Form einer Anzeigeneinrichtung für ein Kraftfahrzeug gemäß einem Ausführungsbeispiel der vorliegenden Erfindung.

Die Vorrichtung 100 zum Anpassen einer Bildverarbeitung basierend auf einer Form einer Anzeigeneinrichtung 200 für ein Kraftfahrzeug umfasst eine Erfassungseinrichtung 10 und eine Recheneinrichtung 20 sowie eine Bildverarbeitungseinrichtung 30.

Die Vorrichtung 100 kann somit ein verbessertes Kamera-Surround-View-System mit angepasster Bildreprojektion bereitstellen.

Die Erfassungseinrichtung 10 ist dazu ausgebildet, eine Form einer Anzeigeneinrichtung 200 und mindestens einen extrinsischen Kameraparameter einer Kamera, mindestens einen intrinsischen Kameraparameter der Kamera, und mindestens ein Sichtfeld der Kamera zu erfassen.

Die Recheneinrichtung 20 ist dazu ausgebildet, eine Reprojektionsfläche und eine Entsprechungstabelle basierend auf der erfassten Form der Anzeigeneinrichtung 200 und basierend auf dem mindestens einen extrinsischen Kameraparameter, dem mindestens einen intrinsischen Kameraparameter, und dem mindestens einen Sichtfeld zu berechnen.

Die Bildverarbeitungseinrichtung 30 ist dazu ausgebildet, eine angepasste Bildverarbeitung basierend auf der berechneten

Reprojektionsfläche und der berechneten Entsprechungstabelle durchzuführen.

Die Fig. 2 zeigt eine schematische Darstellung eines Flussdiagramms eines Verfahrens zum Anpassen einer Bildverarbeitung basierend auf einer Form einer Anzeigeneinrichtung für ein Kraftfahrzeug gemäß einem weiteren Ausführungsbeispiel der vorliegenden Erfindung.

Das Verfahren zum Anpassen einer Bildverarbeitung basierend auf einer Form einer Anzeigeneinrichtung 200 für ein Kraftfahrzeug umfasst die folgenden Verfahrensschritte:
Als ein erster Verfahrensschritt erfolgt ein Erfassen S1 der Form der Anzeigeneinrichtung 200 mittels einer Erfassungseinrichtung 10.
Als ein zweiter Verfahrensschritt erfolgt ein Erfassen S2 von einem extrinsischen Kameraparameter, einem intrinsischen Kameraparameter, und von mindestens einem Sichtfeld der Kamera mittels der Erfassungseinrichtung 10.
Als ein dritter Verfahrensschritt erfolgt ein Berechnen S3 von einer Reprojektionsfläche und einer Entsprechungstabelle basierend auf der erfassten Form der der Anzeigeneinrichtung 200 und basierend auf dem mindestens einen extrinsischen Kameraparameter, dem mindestens einen intrinsischen Kameraparameter, und dem mindestens einen Sichtfeld der Kamera mittels einer Recheneinrichtung 20.
Als ein vierter Verfahrensschritt erfolgt ein Durchführen S4 der angepassten Bildverarbeitung basierend auf der berechneten Reprojektionsfläche und der berechneten Entsprechungstabelle mittels einer Bildverarbeitungseinrichtung 30.

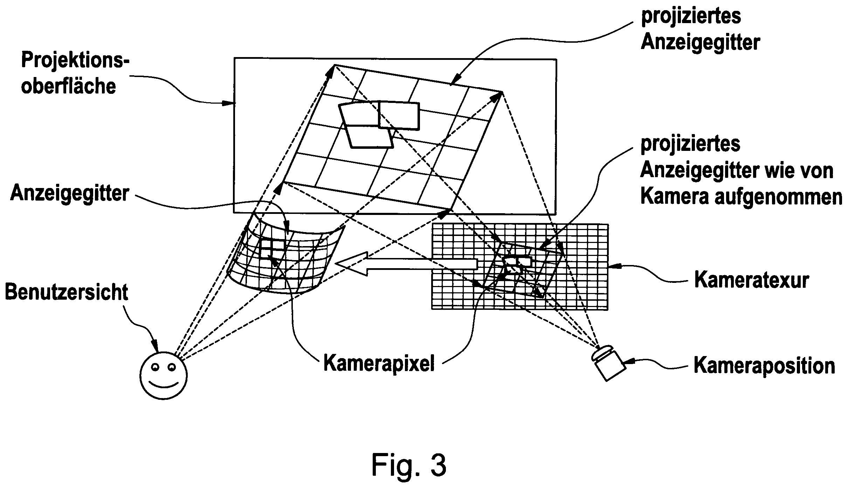

Die Fig. 3 zeigt eine schematische Darstellung eines Verfahrens zum Anpassen einer Bildverarbeitung basierend auf einer Form einer Anzeigeneinrichtung 200 für ein Kraftfahrzeug gemäß einem weiteren Ausführungsbeispiel der vorliegenden Erfindung.

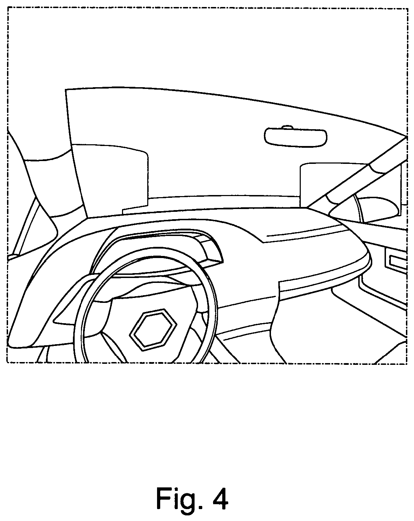

Die Fig. 4 zeigt eine schematische Darstellung einer Simulation der Kamera-Reprojektion mit Entzerrung der Display-Form gemäß einem weiteren Ausführungsbeispiel der vorliegenden Erfindung.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung (100) zum Anpassen einer Bildverarbeitung basierend auf einer Form einer Anzeigeneinrichtung (200) für ein Kraftfahrzeug, die Vorrichtung (100) umfassend:
- eine Erfassungseinrichtung (10), welche dazu ausgebildet ist, die Form der Anzeigeneinrichtung (200) und einen extrinsischen Kameraparameter einer Kamera, einen intrinsischen Kameraparameter der Kamera, und mindestens ein Sichtfeld der Kamera zu erfassen; und
- eine Recheneinrichtung (20), welche dazu ausgebildet ist, eine Reprojektionsfläche und eine Entsprechungstabelle basierend auf der erfassten Form der Anzeigeneinrichtung (200) und basierend auf dem extrinsischen Kameraparameter, dem intrinsischen Kameraparameter, und dem mindestens einen Sichtfeld zu berechnen; und
- eine Bildverarbeitungseinrichtung (30), welche dazu ausgebildet ist, eine angepasste Bildverarbeitung basierend auf der berechneten Reprojektionsfläche und der berechneten Entsprechungstabelle durchzuführen,
**dadurch gekennzeichnet, dass** die Erfassungseinrichtung (10) dazu ausgebildet ist, die Form der Anzeigeneinrichtung (200) einer A-Säule eines Kraftfahrzeuges zu erfassen.

2. Vorrichtung nach Anspruch 1, wobei die Recheneinrichtung (20) dazu ausgebildet ist, die Reprojektionsfläche zum Ausgleichen einer Krümmung der Anzeigeneinrichtung (200) zu berechnen.

3. Vorrichtung nach einem der vorhergehenden Ansprüche, wobei die Recheneinrichtung (20) dazu ausgebildet ist, die Reprojektionsfläche basierend auf einem projizierten Anzeigengitter zu berechnen.

4. Vorrichtung nach Anspruch **3,** wobei die Recheneinrichtung (20) dazu ausgebildet ist, das projizierte Anzeigengitter auf einer Teilfläche des Sichtfeldes zu generieren.

5. Verfahren zum Anpassen einer Bildverarbeitung basierend auf einer Form einer Anzeigeneinrichtung (200) für ein Kraftfahrzeug, das Verfahren umfassend die folgenden Verfahrensschritte:
- Erfassen (S1) der Form der Anzeigeneinrichtung (200) mittels einer Erfassungseinrichtung (10); und
- Erfassen (S2) von einem extrinsischen Kameraparameter, von einem intrinsischen Kameraparameter, und von mindestens einem Sichtfeld der Kamera mittels der Erfassungseinrichtung (10); und
- Berechnen (S3) von einer Reprojektionsfläche und einer Entsprechungstabelle basierend auf der erfassten Form der Anzeigeneinrichtung (200) und basierend auf dem extrinsischen Kameraparameter, dem intrinsischen Kameraparameter, und dem mindestens einen Sichtfeld der Kamera mittels einer Recheneinrichtung (20); und
- Durchzuführen (S4) der angepassten Bildverarbeitung basierend auf der berechneten Reprojektionsfläche und der berechneten Entsprechungstabelle mittels einer Bildverarbeitungseinrichtung (30),
**dadurch gekennzeichnet dass** die Form der Anzeigeneinrichtung (200) einer A-Säule eines Kraftfahrzeuges erfasst wird.

6. Verfahren nach Anspruch 5, wobei die Reprojektionsfläche zum Ausgleichen einer Krümmung der Anzeigeneinrichtung (200) berechnet wird.

7. Verfahren nach einem der vorhergehenden Patentansprüche 5 bis 6, wobei die Reprojektionsfläche basierend auf einem projizierten Anzeigengitter berechnet wird.

8. Verfahren nach Anspruch 7, wobei das projizierte Anzeigengitter auf einer Teilfläche des Sichtfeldes generiert wird.

## Claims

1. An apparatus (100) for adapting image processing based on a shape of a display device (200) for a motor vehicle, the apparatus (100) comprising:
- a detection device (10), which is configured to detect the shape of the display device (200) and an extrinsic camera parameter of a camera, an intrinsic camera parameter of the camera, and at least one field of view of the camera; and
- a computing device (20), which is designed to calculate a reprojection surface and a correspondence table based on the detected shape of the display device (200) and based on the extrinsic camera parameter, the intrinsic camera parameter, and the at least one field of view; and
- an image-processing device (30), which is designed to carry out adapted image processing based on the calculated reprojection surface and the calculated correspondence table, **characterized in that** the detection device (10) is designed to detect the shape of the display device (200) of an A pillar of a motor vehicle.

2. The apparatus according to claim 1, wherein the computing device (20) is designed to calculate the reprojection surface for compensating for a curvature of the display device (200).

3. The apparatus according to any one of the preceding claims, wherein the computing device (20) is designed to calculate the reprojection surface based on a projected display grid.

4. The apparatus according to claim 3, wherein the computing device (20) is designed to generate the projected display grid on a partial surface of the field of view.

5. A method for adapting image processing based on a shape of a display device (200) for a motor vehicle, the method comprising the following method steps:
- detecting (S1) the shape of the display device (200) by means of a detection device (10); and
- detecting (S2) an extrinsic camera parameter, an intrinsic camera parameter, and at least one field of view of the camera by means of the detection device (10); and
- calculating (S3) a reprojection surface and a correspondence table based on the detected shape of the display device (200) and based on the extrinsic camera parameter, the intrinsic camera parameter, and the at least one field of view of the camera using a computing device (20); and
- carrying out (S4) the adapted image processing based on the calculated reprojection surface and the calculated correspondence table by means of an image processing device (30), **characterized in that** the shape of the display device (200) of an A pillar of a motor vehicle is detected.

6. The method according to claim 5, wherein the reprojection surface is calculated for compensating for a curvature of the display device (200).

7. The method according to any one of the preceding claims 5 to 6, wherein the reprojection surface is calculated based on a projected display grid.

8. The method according to claim 7, wherein the projected display grid is generated on a partial surface of the field of view.

## Revendications

1. Dispositif (100) pour l'adaptation d'un traitement d'image basé sur une forme d'un dispositif d'affichage (200) pour un véhicule automobile, le dispositif (100) comprenant :
- un dispositif de détection (10) conçu pour capturer la forme du dispositif d'affichage (200) et un paramètre de caméra extrinsèque d'une caméra, un paramètre de caméra intrinsèque de la caméra, et au moins un champ de vision de la caméra ; et
- un dispositif de calcul (20) conçu pour calculer une surface de reprojection et une table de correspondance sur la base de la forme capturée du dispositif d'affichage (200) et sur la base du paramètre de caméra extrinsèque, du paramètre de caméra intrinsèque et de l'au moins un champ de vision ; et
- un dispositif de traitement d'image (30) conçu pour effectuer un traitement d'image adapté basé sur la surface de reprojection calculée et la table de correspondance calculée, **caractérisé en ce que** le dispositif de capture (10) est configuré pour capturer la forme du dispositif d'affichage (200) d'un montant A d'un véhicule automobile.

2. Dispositif selon la revendication 1, dans lequel le dispositif de calcul (20) est configuré pour calculer la surface de reprojection afin de compenser une courbure du dispositif d'affichage (200).

3. Dispositif selon l'une quelconque des revendications précédentes, dans lequel le dispositif de calcul (20) est conçu pour calculer la zone de reprojection sur la base d'une grille d'affichage projetée.

4. Dispositif selon la revendication 3, dans lequel le dispositif de calcul (20) est configuré pour générer la grille d'affichage projetée sur une zone partielle du champ de vision.

5. Procédé pour l'adaptation d'un traitement d'image basé sur une forme d'un dispositif d'affichage (200) pour un véhicule automobile, le procédé comprenant les étapes de procédé suivantes :
- la capture (S1) de la forme du dispositif d'affichage (200) au moyen d'un dispositif de capture (10) ; et
- la capture (S2) d'un paramètre de caméra extrinsèque, d'un paramètre de caméra intrinsèque et d'au moins un champ de vision de la caméra au moyen du dispositif de capture (10) ; et
- le calcul (S3) d'une surface de reprojection et d'une table de correspondance sur la base de la forme capturée du dispositif d'affichage (200) et sur la base du paramètre de caméra extrinsèque, du paramètre de caméra intrinsèque et de l'au moins un champ de vision de la caméra au moyen d'un dispositif de calcul (20) ; et
- la réalisation (S4) du traitement d'image adapté basé sur la surface de reprojection calculée et la table de correspondance calculée au moyen d'un dispositif de traitement d'image (30), **caractérisé en ce que** la forme du dispositif d'affichage (200) d'un montant A d'un véhicule automobile est capturée.

6. Procédé selon la revendication 5, dans lequel la surface de reprojection est calculée pour compenser une courbure du dispositif d'affichage (200).

7. Procédé selon l'une quelconque des revendications 5 à 6 précédentes, dans lequel la surface de reprojection est calculée sur la base d'une grille d'affichage projetée.

8. Procédé selon la revendication 7, dans lequel la grille d'affichage projetée est générée sur une zone partielle du champ de vision.
